# EUROPÄISCHE PATENTSCHRIFT

(11) **EP 2 028 462 B1**
(45) Veröffentlichungstag und Bekanntmachung des Hinweises auf die Patenterteilung: **06.05.2009**
(21) Anmeldenummer: 07075730.7
(22) Anmeldetag: 24.08.2007
(51) Int. Cl.: G01H 3/10

(54) **Vorrichtung und Verfahren zur qualitativen Bestimmung der Kavitationsenergie von Ultraschall in Behältern**
Device and method for qualitative determination of the cavitation energy of ultrasound in containers
Procédé et dispositif destinés à la détermination qualitative de l'énergie de cavitation ultrasonore dans des récipients

(43) Veröffentlichungstag der Anmeldung: 25.02.2009
(73) Patentinhaber: BANDELIN electronic GmbH & Co. KG, 12207 Berlin (DE)
(72) Erfinder: Rainer Jung, 13125 Berling (DE)
(74) Vertreter: Pfenning, Meinig & Partner GbR

(56) Entgegenhaltungen:
- DE-A1- 4 410 032
- GB-A- 2 147 104
- SU-A1- 1 196 696
- US-A- 3 443 797
- US-A1- 2003 087 748

## Beschreibung

Die Erfindung betrifft ein Verfahren und eine Vorrichtung zur qualitativen Bestimmung der Kavitationsenergie in einem Behälter, in dessen Flüssigkeitsvolumen durch eine geeignete Ultraschallquelle Kavitation ausgelöst wird. Hierbei bilden sich ständig mikroskopisch kleinste Hohlräume die koagulierend sichtbar aufsteigen oder auch implodieren. Kavitation führt durch diese Entstehung von Gas- oder Dampfblasen zu einer messbaren Ausdehnung der Flüssigkeit. Zur Bestimmung der Kavitationsenergie wird eine hermetisch geschlossene Messkammer mit einem schalldurchlässigen Fensterbereich im Behälter angeordnet. Beim Betrieb der Ultraschallquelle kann mit einer kurzzeitigen Messung der durch Kavitation ausgelöste Volumenzuwachs der Messflüssigkeit in der Messkammer bestimmt werden. Die relative Volumenzunahme der Messflüssigkeit entspricht dabei in guter Näherung der anteilig eingebrachten Kavitationsenergie in die Messkammer zum Behälter. Die Kavitationsenergie bestimmt maßgeblich die Ultraschallwirkung und damit auch zum Beispiel die wirksame Reinigungsleistung eines Ultraschallbades. Über die relative Volumenzunahme lässt sich somit beispielsweise die vom Behälter eines Ultraschallbades erbrachte UltraschallReinigungsleistung gut überprüfen.

In der Ultraschall-Reinigungs- und Oberflächentechnik sowie auch in medizinischen Bereichen und in der Industrie werden seit Jahrzehnten Ultraschall-Wannen oder auch andere Behältnisse eingesetzt, die mit den verschiedensten Ultraschallquellen ausgestattet sind. Bei den typischen Ultraschallbädern sind es am Boden oder an den Seiten der Ultraschallwanne angebrachte Ultraschallwandler; es gibt aber auch eine Vielzahl anderer Vorrichtungen wie z. B. Tauchschwinger, Schwingplatten, rohr- oder stabförmige Ultraschallwandler die in Flüssigkeitsbehälter eingebracht werden, um dort die bevorzugte Ultraschallkavitation gezielt auszulösen. Bei den Wandlern kommen dabei bevorzugt niederfrequente Ultraschallsysteme zum Einsatz mit Arbeitsfrequenzen zwischen 18 kHz und 500 kHz, da die durch sie ausgelöste Kavitation bei niedrigen Ultraschall-Frequenzen am stärksten ist. Der Reinigungseffekt bzw. die schmutzlösende Wirkung der Kavitation an der Oberfläche von Teilen ist dann am größten. Aber auch verschiedene dispergierende, de-und emulgierende sowie sonochemische Effekte sind bei niedriger Arbeitsfrequenz am größten.

Zentrales Problem für viele Anwender von Ultraschall ist die Forderung nach einer Überprüfbarkeit ihrer Reinigungs- oder Kavitationsleistung. Da eine direkte Messbarkeit der durch Ultraschall in die Flüssigkeit eingebrachten Kavitation oder Kavitationsenergie sehr schwierig ist, haben sich alternative Methoden entwickelt.

Eine gängige und sehr preiswerte Möglichkeit stellt der so genannte Folientest nach IEC/TR 60886 dar. Hierbei wird eine sehr dünne Aluminiumfolie auf einen Drahtrahmen gespannt und für eine definierte, immer gleiche Zeitspanne schräg in das Ultraschallbad gehalten. Bei Vorhandensein von Kavitation wird die Folie sichtbar angegriffen und es bilden sich flächige Perforationen und/oder Löcher. Zu verschiedenen Zeitpunkten und unter gleichen Bedingungen durchgeführt, bieten derartige Folienbilder eine Beurteilungsgrundlage für eine gleich bleibende oder nachlassende Reinigungsleistung im Ultraschallbad. Nachteilig sind die nicht immer einfache Reproduzierbarkeit der Messbedingungen als auch der Umstand, dass die Folie selbst das Schallfeld im Ultraschallbad verändert.

Weitere Methoden bestehen darin, mittels eines kleinen Schalldrucksensors örtlich die Schallwechseldruckamplitude an einem festgelegten Ort im Ultraschallbad zu erfassen und diesen Wert in eine energieäquivalente Größe umzurechnen und anzuzeigen.

Der Schalldrucksensor kann dabei in Stabform ein einzelnes Piezoelement enthalten oder weist eine schalldruckempfindliche Membranfläche mit mehreren Sensoren auf. Derartige "ultrasonic energy meter" oder "cavitation meter" werden z. B. von der Firma ppb/USA vertrieben und sind beispielsweise auch in den Patentschriften US 313 565 und US 669 1 578 beschrieben.

Ein typische Sensoranordnung mit mehreren Piezosensoren auf einer Quarzscheibe ist in der US 6450184 beschrieben. Die beschriebene Messapparatur für ein Ultraschallbad soll zur Aufnahme des "Kavitationsprofiles" nahe der Oberfläche von zu reinigenden Teilen, zum Beispiel Waferscheiben dienen. Aus den summierten elektrischen Signalen der Sensoren soll die örtliche Verteilung der "Kavitationsernergie" ermittelt werden.

Gemeinsame Nachteile dieser Techniken sind die Abhängigkeit der Messwerte vom jeweiligen Messort als auch die durch die Messvorrichtung selbst verursachte Schallfeldveränderung. Bei Handmessungen mit Einzelsensoren kommt noch eine individuelle Fehlerkomponente durch Lageveränderungen hinzu. Außerdem gibt der gemessene Schalldruck keinerlei Auskunft über die Kavitation, da der Zusammenhang hochgradig nichtlinear ist.

Zur Überprüfung der Reinigungsfunktion von Ultraschallbädern werden auch kleine Teströhrchen eingesetzt. Die Teströhrchen werden dabei an verschiedene Stellen in einen Reinigungskorb in das Ultraschallbad gelegt. Bei Vorhandensein von Kavitation zeigen die Teströhrchen nach einer bestimmten Zeit einen Farbumschlag von grün auf gelb. Dieser soll auf einer kavitationsabhängigen pH-Wertänderung der Lösung im Röhrchen beruhen, die auch noch kleinste Glaskügelchen als kavitationsauslösende Keime enthält. Zu beachten ist, dass der Farbumschlag von der örtlichen Ultraschallintensität, von der Badtemperatur und von der Ultraschallfrequenz abhängig ist. Tritt keine Farbveränderung auf, bedeutet dies nicht automatisch, dass an der platzierten Stelle keine Kavitation stattfindet. Vermutlich wirkt sie mehr an der Außenfläche des Röhrchens, reicht aber nicht zur Initiierung des Farbumschlages. Zur spontanen Schnelltestung ob ein Ultraschallgerät überhaupt noch reinigt, sind die Teströhrchen unter Umständen verwendbar. Für eine qualitative Beurteilung der Reinigungsleistung eines Ultraschallbades sind sie nicht geeignet.

Für genauere Untersuchungen zur Reinigungsleistung von Ultraschallbädern werden gelegentlich auch Messvorrichtungen mit breitbandigen Hydrofonen verwendet. In der DE 102006026525 ist z. B. ein solches Verfahren beschrieben. Dabei werden die kavitationsbedingten Rauschsignale mit dem Hydrofon an verschiedenen Punkten im Ultraschallbad aufgenommen, gemittelt und spektral ausgewertet. Das Verfahren und die nötige Mess- und Auswertetechnik ist sehr aufwendig und für eine routinemäßige Überprüfung von Ultraschallbädern nicht geeignet.

Die GB 2 147 104 A zeigt eine Messkammer zur Bestimmung der von einer Ultraschallquelle erzeugten Energie über den Volumenzuwachs einer in der Messkammer enthaltenen Messflüssigkeit, wobei die Messkammer einen Behälter zur Aufnahme der Messflüssigkeit mit einem schalldurchlässigen Fensterbereich und einen Sensor zur Messung der Volumenzunahme der Messflüssigkeit aufweist. In den bevorzugten Ausführungsformen wird durch eine Erwärmung eine Volumenzunahme der blasenfreien Flüssigkeit erreicht, die dann gemessen wird. Alternativ ist eine Kavitationsmessung erwähnt.

Die SU 1 196 696 A1 offenbart eine Messung über ein Kapillarrohr.

Ergänzender Stand der Technik wird in der DE 44 10 032 A1, der US 3 443 797 A sowie der US 2003/087748 A1 gezeigt.

Der vorliegenden Erfindung liegt daher die Aufgabe zugrunde, eine Messkammer bzw. ein Verfahren zu deren Betrieb bereitzustellen, wobei über die Messung einer kavitationsbedingten Volumenzunahme eine Bewertung der Ultraschallreinigungsleistung einfach, zuverlässig und verschleißfrei möglich ist.

Diese Aufgabe wird durch die Gegenstände der unabhängigen Patentansprüche gelöst.

Das Auftreten von Ultraschallkavitation als wesentliche Wirkungsursache im Badvolumen ist von vielen und sich ständig verändernden Einflussfaktoren abhängig. Dazu zählen vorrangig: vorhandene Objekte im Bad (Korb, Reinigungsteile, Teströhrchen), Verschmutzung, Temperatur, Füllstand, Viskosität etc. Dazu kommt, dass das Ultraschallfeld selbst nicht homogen ist, sich ständig zeitlich ändert und damit Größe, Intensität, Verteilung und das Auftreten von Kavitationsbläschen sehr unterschiedlich sein kann.

Für eine Überprüfung der Reinigungsleistung eines Ultraschallbades ist die Ermittlung der auftretenden oder eingebrachten Kavitationsenergie in einem genügend großen Teilvolumen vom Ultraschallbad hinreichend. Dabei sollte das Messverfahren und die Vorrichtung so gewählt werden, dass sich die vorgenannten Einflüsse nur gering auswirken.

Es ist bekannt, dass wenn durch eine geeignete Ultraschallquelle in einem Flüssigkeitsvolumen Kavitation ausgelöst wird, die dabei entstehenden Gas- oder Dampfblasen zu einer Ausdehnung der Flüssigkeit führen. Diese ist bei Wahl eines genügend großen Flüssigkeitsvolumens unter Beachtung verschiedener Randbedingungen gut messbar.

Zur Bestimmung der Kavitationsenergie eines Ultraschallbades wird deshalb eine ausreichend große und hermetisch geschlossene Messkammer mit einem schalldurchlässigen Fensterbereich vorgeschlagen, die in einem Ultraschallbad eingetaucht werden kann. Das Ultraschallbad ist dabei mit normalem Wasser befüllt, dass sich trotz regionaler Qualitätsunterschiede schallphysikalisch gleichwertig verhält. Beim Betrieb des Ultraschallgerätes - z. B. mit einer Ultraschallquelle am Boden - wird dann mittels einer kurzzeitigen Messung der durch Kavitation ausgelöste Volumenzuwachs der Messflüssigkeit in der Messkammer bestimmt. Die relative Volumenzunahme der Messflüssigkeit kann durch einen geeigneten Sensor an der Messkammer direkt oder auch indirekt ermittelt werden. Die Volumenzunahme entspricht dabei in guter Näherung der anteilig eingebrachten Kavitationsenergie in die Messkammer. Aus dem Verhältnis zum gesamten Flüssigkeitsvolumen im Ultraschallbad lässt sich auf diese Weise die Reinigungsleistung eines Ultraschallbades gut verifizieren.

Es handelt sich also nach dem Vorrichtungsanspruch 1 um ein Behältnis mit einer Messkammer, das mit einer niederfrequenten Ultraschallquelle zur Kavitationserzeugung ausgerüstet ist. Wichtig ist hierbei also immer, dass es ein Behältnis mit einem flüssigen Medium ist, in das Ultraschall eingekoppelt wird. Hierbei sollte es sich um vorzugsweise um "niederfrequenten" Ultraschall handeln, also im Bereich zwischen 20 kHz und 100 kHz, es sind jedoch auch Frequenzen bis zu 1 MHz möglich. Grundlegend neu ist hierbei, dass die durch Ultraschall eingeleitete Kavitationsenergie (welche auch einen Rückschluss auf die Reinigungsleistung zulässt) über den Volumenzuwachs einer in der Messkammer enthaltenen Messflüssigkeit bestimmt wird. Die Messkammer hat hierbei einen Behälter mit einem schalldurchlässigen Fensterbereich (also ein oder mehrere Fenster bzw. ein einziges, durchgehendes Fenster, das die Oberfläche bildet). Außerdem weist der Behälter einen Sensor zur Messung der Volumenzunahme der Messflüssigkeit auf. Die Messkammer ist in dem Behältnis positioniert.

Vorteilhaft ist also, dass mit einem "autarken" System, das in beliebige Ultraschallbäder bzw. -behältnisse eingefügt werden kann, ein Rückschluss auf die Ultraschallleistung bzw. Reinigungsleistung möglich ist. Es muss hier keine Anbindung zu der Elektronik des Ultraschallbades bzw. der dortigen Ultraschallerzeuger erfolgen, allerdings ist dies möglich, um beispielsweise dann eine automatische Abschaltung zu erzeugen. Es sollte jedoch bei einer Anbindung darauf geachtet werden, dass entsprechende Störeinflüsse ausgefiltert werden. Die Messkammer kann vorzugsweise auch im Batteriebetrieb gefahren werden, wenn die elektrische oder elektronische Sensoreinrichtung sehr stromsparend ausgeführt ist; bei einer einfachen Messung mit einem Kapillarrohr ist selbst dies nicht notwendig).

Das erfindungsgemäße Verfahren zum Betreiben der Messkammer enthält die Schritte:
a) vollständige Befüllung der Messkammer mit einem definierten Volumen der Messflüssigkeit mit gegebenenfalls Verschließen der Messkammer (je nach Typ des Sensors ist ein solcher Verschluss aus physikalischen Gründen notwendig oder nicht) ;
b) Positionierung der Messkammer in das Ultraschallbad bzw. das Behältnis, das mit einer niederfrequenten Ultraschallquelle ausgerüstet ist, beispielsweise durch Einhängung über den Wannenrand;
c) Befüllen des betriebsbereiten Behältnisses oder Ultraschallbades mit der gleichen Flüssigkeit oder einer Referenzflüssigkeit bis zur üblichen Füllstandsmarkierung (günstigenfalls die gleiche Flüssigkeit in der Messkammer sowie in dem übrigen Behälter verwendet; bei bekannter Beziehung der Flüssigkeit in der Messkammer sowie einer hiervon abweichenden Referenzflüssigkeit im Ultraschallbad können auch unterschiedliche Flüssigkeiten verwendet werden; wichtig ist nur, dass aufgrund einer bekannten Beziehung die Werte der Messkammer auf die Werte im Ultraschallbad/Behältnis umrechenbar sind);
d) Inbetriebnahme der Ultraschallquelle bzw. kurzes Einschalten des Ultraschallbades, vorzugsweise im Sekundenbereich (vorzugsweise 1 bis 30 Sekunden, besonders vorzugsweise 1 bis 10 Sekunden, ganz besonders vorzugsweise 1 bis 5 Sekunden);
e) Erfassung des entstehenden Volumenzuwachses der Messflüssigkeit über den Sensor und Registrierung des daraus abgeleiteten Beurteilungswertes für die Kavitationsenergie, die Ultraschallwirkung oder auch Reinigungsleistung vom Ultraschallbad oder Behältnis.

Vorteilhafte Weiterbildungen der vorliegenden Erfindung werden in den abhängigen Ansprüchen beschrieben.

Eine vorteilhafte Weiterbildung sieht vor, dass der Behälter der Messkammer mit dem schalldurchlässigen Fensterbereich einen definierten, unveränderlichen Volumeninhalt besitzt und vollständig mit der Messflüssigkeit befüllbar ist. Die Messflüssigkeit ist hierbei austauschbar und kann (je nach Umgebungsbedingung) anders gewählt werden, außerdem kann bei Transportzwecken die Vorrichtung entleert werden.

Eine weitere vorteilhafte Weiterbildung sieht vor, dass der Behälter mit dem schalldurchlässigen Fensterbereich einen starren, hermetisch geschlossenen, nicht flexiblen Wandbereich besitzt. Hierdurch wird eine klare Trennung der Flüssigkeit im Ultraschallbad/-behältnis sowie in der Messkammer erreicht, es kommt hier auch zu keinen Volumeneffekten, aufgrund des Zusammendrückens des Behälters der Messkammer. Alternativ kann jedoch (unter anderen Voraussetzungen) der schalldurchlässige Fensterbereich einen flexiblen Wandaufbau aufweisen.

Wichtig ist auch, dass der Behälter einen Sensor zur Messung der Volumenzunahme der Messflüssigkeit aufweist. Dies ist in einer besonders vorteilhaften Ausführungsform dadurch möglich, dass der Sensor als Kapillarrohr ausgeführt ist, welches mit dem Behälter fest verbunden ist, so dass bei Volumenzunahme die Messflüssigkeit im Kapillarrohr aufsteigen kann.

Alternativ ist dieser Sensor auch als Druck-, Biege-oder Dehnungssensor möglich, der vorzugsweise fest an der Wand des Behälters der Messkammer angeordnet ist und wobei somit die Volumenzuname der Messflüssigkeit gemessen werden kann. Bei diesen (vorzugsweise batteriebetriebenen) Anordnungen können hierbei für entsprechende Flüssigkeiten auch Referenzwerte eingespeichert sein bzw. Wertetabellen abgespeichert sein, die auf die Ultraschallleistung/Reinigungsleistung im Ultraschallbad/-behältnis hinweisen.

Der schalldurchlässige Fensterbereich weist für eine maximale Schalldurchlässigkeit und senkrechtem Schalleinfall eine bestimmte Dicke auf, die frequenzbezogen einem Vielfachen der halben Wellenlänge des Materials entspricht. In der Praxis tritt dieser rein theoretische Fall nicht auf. Deutliche Unterschiede zwischen den Schallkennimpedanzen von der Messflüssigkeit zur Referenzflüssigkeit beeinträchtigen die Schalldurchlässigkeit und sind daher zu berücksichtigen.

Der schalldurchlässige Fensterbereich kann aus einem Metall-, Kunststoff- Glas- oder Verbundwerkstoff gefertigt sein. Unter Berücksichtigung eines gewissen Absorptionsgrades kann der schalldurchlässige Fensterbereich auch eine geringe Wandstärke aufweisen. Mit "geringer Wandstärke" sind hierbei Folien bzw. dünne Scheiben in einer Dicke von 0,05 mm bis 5 mm, vorzugsweise unter 1 mm, vorzusehen.

Weitere Vorteilhafte Weiterbildungen werden in den übrigen abhängigen Ansprüchen angegeben.

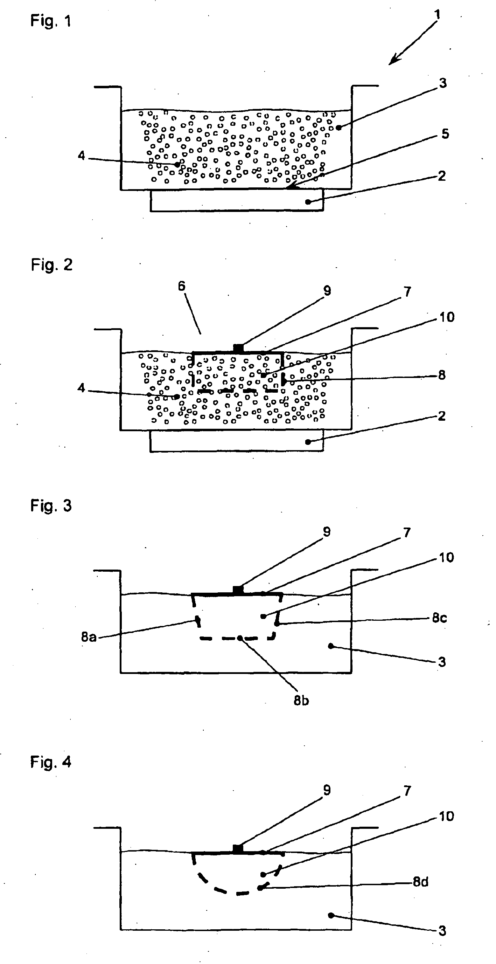

Die Erfindung wird nun anhand von Figuren 1 bis 4 erläutert.

Fig. 1 zeigt skizzenhaft im Schnitt ein übliches Ultraschallbad 1 mit einer niederfrequenten Ultraschallquelle 2, befüllt mit dem Flüssigkeitsvolumen 3 und einem Kavitationsfeld 4, welches zur Einfachheit durch kleine Kreise illustriert wurde. Das Ultraschallbad 1 ist hier beispielsweise eine offene Wanne, gefertigt zum Beispiel aus Edelstahl oder Kunststoff. Die Ultraschallquelle 2 - zum Beispiel ein piezoelektrisches System - ist hier am Boden 5 des Ultraschallbades 1 fest angebracht und wird durch einen nicht dargestellten Generator mit ausreichender HF-Energie in Resonanz betrieben. Im aktiven Betrieb erzeugt die niederfrequente Ultraschallquelle 2 longitudinale Ultraschallwellen, die sich über den Boden 5 im Flüssigkeitsvolumen 3 überall ausbreiten und ein intensives Kavitationsfeld 4 erzeugen. Ausbildung, Verteilung und Intensität der Kavitationsereignisse im Kavitationsfeld 4 sind dabei irregulär und exakt nicht vorher bestimmbar. Besteht die Ultraschallquelle 2 aus mehreren piezoelektrischen Systemen, verteilt über den Boden 5 des Ultraschallbades 1, kann von einer annähernd gleichmäßigen Intensität des Kavitationsfeldes 4 im Flüssigkeitsvolumen 3 ausgegangen werden.

Fig. 2 entspricht im Wesentlichen der Schnittdarstellung in Fig. 1, wobei in das Flüssigkeitsvolumen 3 eine hermetisch geschlossene Messkammer 6 eintaucht. Die Messkammer 6 - angedeutet durch eine größere Strichstärke - besteht aus einem Behälter 7 mit einem schalldurchlässigen Fensterbereich 8(gestrichelt Linie) und einem Sensorelement 9. Die Messkammer 6 ist vollständig mit einer Messflüssigkeit 10 definiertem Volumens befüllt, in der durch Ultraschallanregung Kavitation ausgelöst werden kann - zum Beispiel mit Wasser. Der Behälter 7 und der schalldurchlässige Fensterbereich 8 bestehen aus einem starren nicht dehnbaren Werkstoff geringer Wanddicke. Das Sensorelement 9 kann in die Behälterwand integriert oder von Außen angebracht sein.

Beim Betrieb der Ultraschallquelle 2 entsteht im Flüssigkeitsvolumen 3 des Ultraschallbades 1 ein intensives Ultraschallfeld 4. Dieses wirkt über den schalldurchlässigen und großzügigen Fensterbereich 8 des Behälters 7 in die Messkammer 6 hinein. Dadurch entsteht auch in der Messflüssigkeit 10 Kavitation und das Volumen vergrößert sich. Der Volumenzuwachs der Messflüssigkeit 10 wird über das Sensorelement 9 gemessen. Die Betriebs- oder Messzeit sollte allerdings kurz sein - zum Beispiel im Sekundenbereich liegen - um Messfehler durch einen temperaturbedingten Volumenzuwachs der Messflüssigkeit 10 vernachlässigen zu können. Generell zu beachten ist dabei auch die Temperaturabhängigkeit des Ausdehnungskoeffizienten von Flüssigkeiten.

Der messbare Volumenzuwachs ist in der Regel klein und bewegt sich im µl- bis ml-Bereich. Er ist entscheidend von der Größe des Fensterbereiches 8 als auch vom Messvolumen 10 abhängig. Diese sollten deshalb so groß wie technisch möglich gewählt werden.

Fig. 3 zeigt wiederum skizzenhaft im Schnitt eine Ausführung der erfindungsgemäßen Messkammer 6 mit einem großen eckigen Behälter 7, der über drei schräge Fensterbereiche 8a, 8b und 8c verfügt.

Fig. 4 zeigt eine ähnliche Ausführung wie in Fig. 3, wobei der Behälter 7 über einen runden oder eiförmigen Fensterbereich 8d verfügt.

Figuren 3 und 4 gemeinsam ist das Bestreben den Behälter 7 als auch seinen Fensterbereich 8 so groß wie möglich zu gestalten, damit der durch Kavitation ausgelöste Volumenzuwachs in der Messflüssigkeit 10 groß ist. Behälter und Fensterbereich können auch segmentartig aus mehreren gleichen oder verschiedenartigen Volumensegmenten zusammengesetzt sein und unterschiedliche Konturen im Schnitt aufweisen. Wichtig ist lediglich eine großzügige Auslegung/ Gestaltung des schalldurchlässigen Bereiches.

Der Volumenzuwachs kann über ein Sensorelement 9 am Behälter 7 der Messkammer 6 direkt oder indirekt erfasst werden. Eine indirekte Messung des Volumenzuwachses ist zum Beispiel über einen in die Wand des Behälters 7 integrierten Dehnungsmessstreifen möglich. Für eine direkte Messung des Volumenzuwachses der Messflüssigkeit 10 bietet sich die Auswertung des Flüssigkeitsstandes in einer geeichten Kapillare als Sensor an. Diese wird zu diesem Zweck am Behälter angebracht bzw. ist mit ihm direkt verbunden.

Es sind aber auch andere Arten der Messwerterfassung des Volumenzuwachses - zum Beispiel über eine Differenzdruckmessung - möglich.

Der Volumenzuwachs-Messwert wird über eine nicht dargestellte Auswerte- und/oder Wandlervorrichtung in eine anzeige- und verarbeitungsfähige Parametergröße umgewandelt. Die Auswerteeinheit verfügt über übliche optoelektronische, mechanische und/oder elektronische Komponenten.

Es hat sich gezeigt, dass der durch die in der Messkammer 6 auftretende Kavitation oder die dort eingebrachte Kavitationsenergie hervorgerufene Volumenzuwachs der Messflüssigkeit 10 gut ermittelbar ist und als Maß für die Reinigungsleistung eines Ultraschallbades herangezogen werden kann.

Durch die integrierende Messung von unzähligen Kavitationsereignissen in einem relativ großen Teil- oder Messvolumen vom Ultraschallbad - der Messkammer 6 - spielen Inhomogenitäten des Ultraschallfeldes, ungleiche Schallfeldverteilungen und Intensitätsunterschiede nur eine geringe Rolle bei der qualitativen Bestimmung der Kavitationsenergie von einem Ultraschallbad.

Im Folgenden soll das Verfahren zur qualitativen Bestimmung der Kavitationsenergie von Ultraschall in Behältern, beispielsweise in Ultraschallbädern, insbesondere das Verfahren zum Betreiben der erfindungsgemäßen Vorrichtung, an Hand eines typischen Ultraschallbades näher beschrieben werden.

Im ersten Schritt wird die Messkammer 6 mit einem definierten Volumen mit der Messflüssigkeit 10 vollständig befüllt und gegebenenfalls verschlossen, je nach Wahl des Sensortyps. Die Messflüssigkeit kann normales Stadtwasser oder eine wässrige Lösung mit Entspannungszusätzen sein. Mess- und Badflüssigkeit sollten hinsichtlich ihrer physikalischen Eigenschaften (Viskosität, Temperatur, Zusammensetzung etc.) identisch sein.

In einem zweiten Schritt wird die Messkammer 6 im Ultraschallbad 1 positioniert, zum Beispiel durch Einhängung über den Wannenrand.

In einem dritten Schritt wird das betriebsbereite Ultraschallbad 1 mit der gleichen Flüssigkeit - zum Beispiel Stadtwasser gleicher Temperatur - bis zur üblichen Füllstandsmarkierung (= Arbeitsfüllmenge nach Angabe des Herstellers) befüllt. Je nach Badgröße ist zeitlich für einen Temperaturausgleich Sorge zu tragen.

In einem vierten Schritt wird die Ultraschallquelle 2 in Betrieb gesetzt bzw. das Ultraschallbad 1 wie üblich eingeschaltet. Die Betriebszeit sollte kurz gewählt werden, zum Beispiel im Sekundenbereich von 1 sec bis 5 sec, um größere Messfehler durch einen temperaturbedingten Volumenzuwachs der Messflüssigkeit 10 vernachlässigen zu können. Der in dieser Zeit entstehende Volumenzuwachs wird über den Sensor 9 erfasst und als Maß für die Reinigungsleistung eines Ultraschallbades ausgewertet und angezeigt. In die Auswerte- und Anzeigeeinheit können sinnvoller Weise auch die technischen Parameter des Ultraschallbades - zum Beispiel die Leistung - mit verarbeitet werden. Damit wären auch Rückschlüsse auf die Beibehaltung oder Verschlechterung des Gesamtwirkungsgrades möglich.

## Patentansprüche

1. Behältnis mit einer Messkammer (6), das mit einer niederfrequenten Ultraschallquelle (2) zur Kavitationserzeugung ausgerüstet ist, zur Bestimmung der Kavitationsenergie über den Volumenzuwachs einer in der Messkammer enthaltenen Messflüssigkeit(10), wobei die Messkammer einen Behälter (7) zur Aufnahme der Messflüssigkeit mit einem schalldurchlässigen Fensterbereich (8) und einen Sensor (9) zur Messung der Volumenzunahme der Messflüssigkeit (10) aufweist,
**dadurch gekennzeichnet, dass** die Messkammer in dem Behältnis positioniert ist.

2. Behältnis mit Messkammer nach Anspruch 1**, dadurch gekennzeichnet, dass** der Behälter (7) mit dem schalldurchlässigen Fensterbereich (8) einen definierten, unveränderlichen Volumeninhalt besitzt und vollständig mit einer Messflüssigkeit(10) befüllbar ist.

3. Behältnis mit Messkammer nach Anspruch 1 und 2, **dadurch gekennzeichnet, dass** der Behälter (7) mit dem schalldurchlässigen Fensterbereich (8) einen starren, hermetisch geschlossenen, nicht flexiblen Wandaufbau besitzt.

4. Behältnis mit Messkammer nach Anspruch 1 und 2, **dadurch gekennzeichnet, dass** der Behälter (7) mit dem schalldurchlässigen Fensterbereich (8) einen flexiblen Wandaufbau aufweist.

5. Behältnis mit Messkammer nach Ansprüchen 1 bis 4, **dadurch gekennzeichnet, dass** am Behälter (7) ein Sensor (9) zur Messung der Volumenzunahme der Messflüssigkeit (10) angebracht ist.

6. Behältnis mit Messkammer nach Ansprüchen 1 bis 5, **dadurch gekennzeichnet, dass** der Sensor (9) als ein Kapillarrohr ausgeführt ist, welches mit dem Behälter (7) fest verbunden ist, so dass bei Volumenzunahme die Messflüssigkeit (10) im Kapillarrohr aufsteigen kann.

7. Behältnis mit Messkammer nach Ansprüchen 1 bis 5, **dadurch gekennzeichnet, dass** der Sensor (9) in oder an der Wand des Behälter (7) fest montiert ist und als Druck-, Biege- oder Dehnungssensor die Volumenzunahme der Messflüssigkeit (10) messen kann.

8. Behältnis mit Messkammer nach Anspruch 1 bis 7, **dadurch gekennzeichnet, dass** der Behälter (7) und der schalldurchlässige Fensterbereich (8) aus einem Metall-, Kunststoff-, Glas- oder Verbundwerkstoff mit geringer Wandstärke gefertigt ist.

9. Verfahren zum Betreiben des Behältnisses mit Messkammer (6) nach einem der Ansprüche 1 bis 8 enthaltend die Schritte: a) Vollständige Befüllung der Messkammer (6) mit einem definierten Volumen der Messflüssigkeit (10) mit gegebenenfalls Verschließen der Messkammer (6), je nach Wahl des Sensortyps; b) Positionierung der Messkammer(6) in ein Behältnis, dass mit einer niederfrequenten Ultraschallquelle (2) ausgerüstet ist, oder in ein Ultraschallbad (1), zum Beispiel durch Einhängung über den Wannenrand; c) Befüllen des betriebsbereiten Behältnisses oder Ultraschallbades (1) mit der gleichen Flüssigkeit oder einer Referenzflüssigkeit bis zur üblichen Füllstandsmarkierung; d) Inbetriebnahme der Ultraschallquelle (2) bzw. kurzes Einschalten des Ultraschallbades (1) über eine kurze Betriebszeit, beispielsweise im Sekundenbereich; e) Erfassung des entstehenden Volumenzuwachses der Messflüssigkeit(10) über den Sensor (9) und Registrierung des daraus abgeleiteten Beurteilungswertes für die Kavitationsenergie, die Ultraschallwirkung oder auch Reinigungsleistung vom Ultraschallbad (1) oder Behältnis.

## Claims

1. Container with a measuring chamber (6) for an ultrasonic bath (1) or for a container which is equipped with a low-frequency ultrasonic source (2) for cavitation generation, for determining the cavitation energy via the increase in volume of a measuring liquid (10) contained in the measuring chamber, the measuring chamber having a container (7) for receiving the measuring liquid with a sound-permeable window region (8) and a sensor (9) for measuring the increase in volume of the measuring liquid (10),
**characterized in that**
the measuring chamber is positioned in the container.

2. Container with a measuring chamber according to claim 1, **characterised in that** the container (7) with the sound-permeable window region (8) has a defined, unchanging volume content and can be filled completely with a measuring liquid (10).

3. Container with a measuring chamber according to claim 1 and 2, **characterised in that** the container (7) with the sound-permeable window region (8) has a rigid, hermetically sealed, non-flexible wall construction.

4. Container with a measuring chamber according to claim 1 and 2, **characterised in that** the container (7) with the sound-permeable window region (8) has a flexible wall construction.

5. Container with a measuring chamber according to claims 1 to 4, **characterised in that** a sensor (9) is fitted on the container (7) for measuring the increase in volume of the measuring liquid (10).

6. Container with a measuring chamber according to claims 1 to 5, **characterised in that** the sensor (9) is configured as a capillary tube which is connected securely to the container (7) so that the measuring liquid (10) can rise in the capillary tube during an increase in volume.

7. Container with a measuring chamber according to claims 1 to 5, **characterised in** the sensor (9) is mounted securely in or on the wall of the container (7) and, as a pressure-, bending or expansion sensor, can measure the increase in volume of the measuring liquid (10).

8. Container with a measuring chamber according to claim 1 to 7, **characterised in that** the container (7) and the sound-permeable window region (8) is manufactured from a metal, plastic material, glass or composite material with a small wall thickness.

9. Method for operating the container with a measuring chamber (6) according to one of the claims 1 to 8, containing the steps: a) complete filling of the measuring chamber (6) with a defined volume of measuring liquid (10) with possibly sealing of the measuring chamber (6) according to the choice of sensor type; b) positioning of the measuring chamber (6) in a container which is equipped with a low-frequency ultrasonic source (2), or in an ultrasonic bath (1), for example by securing over the tub edge; c) filling of the container or ultrasonic bath (1), which is ready for operation, with the same liquid or a reference liquid up to the normal level marking; d) setting of the ultrasonic source (2) in operation or switching on the ultrasonic bath (1) briefly over a short operating time, for example in the seconds range; e) detection of the resulting increase in volume of the measuring liquid (10) via the sensor (9) and recording of the assessed value derived therefrom for the cavitation energy, the ultrasonic effect or also cleaning power of the ultrasonic bath (1) or container.

## Revendications

1. Réceptacle pourvu d'une chambre de mesure (6), qui est équipé d'une source d'ultrasons basse fréquence (2) pour générer une cavitation, pour déterminer l'énergie de cavitation via l'accroissement du volume d'un liquide de mesure (10) contenu dans la chambre de mesure, la chambre de mesure présentant un récipient (7) pour recevoir le liquide de mesure avec une zone de fenêtre perméable au son (8) et un capteur (9) pour mesurer l'augmentation du volume du liquide de mesure (10), **caractérisé en ce que** la chambre de mesure est positionnée dans le réceptacle.

2. Réceptacle pourvu d'une chambre de mesure selon la revendication 1, **caractérisé en ce que** le récipient (7) avec la zone de fenêtre perméable au son (8) possède une contenance volumique définie invariable et est propre à être entièrement rempli d'un liquide de mesure (10).

3. Réceptacle pourvu d'une chambre de mesure selon les revendications 1 et 2, **caractérisé en ce que** le récipient (7) avec la zone de fenêtre perméable au son (8) possède une structure de paroi rigide, hermétiquement fermée, non flexible.

4. Réceptacle pourvu d'une chambre de mesure selon les revendications 1 et 2, **caractérisé en ce que** le récipient (7) avec la zone de fenêtre perméable au son (8) présente une structure de paroi flexible.

5. Réceptacle pourvu d'une chambre de mesure selon les revendications 1 à 4, **caractérisé en ce qu'**un capteur (9) est agencé dans le récipient (7) pour mesurer l'augmentation de volume du liquide de mesure (10).

6. Réceptacle pourvu d'une chambre de mesure selon les revendications 1 à 5, **caractérisé en ce que** le capteur (9) se présente sous la forme d'un tube capillaire qui est raccordé de manière fixe au récipient (7), de sorte que le liquide de mesure (10) est propre, l'ors d'une augmentation de son volume, à monter dans le tube capillaire.

7. Réceptacle pourvu d'une chambre de mesure selon les revendications 1 à 5, **caractérisé en ce que** le capteur (9) est monté fixe dans ou contre la paroi du récipient (7) et est propre à mesurer en tant que capteur de pression, de flexion ou de dilatation, l'augmentation du volume du liquide de mesure (10).

8. Réceptacle pourvu d'une chambre de mesure selon les revendications 1 à 7, **caractérisé en ce que** le récipient (7) et la zone de fenêtre perméable au son (8) sont fabriqués en métal, en matière plastique, en verre ou en matériau composite d'une faible épaisseur de paroi.

9. Procédé d'exploitation du réceptacle pourvu d'une chambre de mesure (6) selon l'une quelconque des revendications 1 à 8, comprenant les étapes consistant à : a) remplir complètement la chambre de mesure (6) avec un volume défini du liquide de mesure (10) en fermant éventuellement la chambre de mesure (6) en fonction du choix du type de capteur ; b) positionner la chambre de mesure (6) dans un réceptacle qui est équipé d'une source d'ultrasons basse fréquence (2), ou dans un bain à ultrasons (1), par exemple en l'accrochant sur le bord de la cuve ; c) remplir le réceptacle prêt à l'emploi ou le bain à ultrasons (1) avec le même liquide ou un liquide de référence jusqu'au repère de niveau de remplissage habituel ; d) mettre en service la source d'ultrasons (2) ou mettre brièvement en marche le bain à ultrasons (1) sur une courte période de fonctionnement, par exemple de l'ordre de quelque secondes ; e) déterminer via le capteur (9) l'accroissement produit du volume du liquide de mesure (10) et enregistrer la valeur d'évaluation qui en est tirée pour l'énergie de cavitation, l'effet des ultrasons ou également la performance de purification du bain à ultrasons (1) ou du réceptacle.
